# EUROPEAN PATENT APPLICATION

(11) **EP 4 534 319 A1**
(43) Date of publication of application: **09.04.2025**
(21) Application number: 24197513.5
(22) Date of filing: 30.08.2024
(51) Int. Cl.: B60K 31/00, B60K 35/22, B60K 35/233, B60K 35/28, B60K 35/29, B60K 35/81

(54) **DISPLAY DEVICE FOR VEHICLE, DISPLAY METHOD FOR VEHICLE, AND RECORDING MEDIUM**

(30) Priority: 04.10.2023 JP 2023173223
(71) Applicant: TOYOTA JIDOSHA KABUSHIKI KAISHA, Aichi-ken, 471-8571 (JP)
(72) Inventor: TSUJINO, Miki, Toyota-shi, 471-8571 (JP); ITO, Hironori, Tokyo, 103-0022 (JP)
(74) Representative: J A Kemp LLP

(57) **Abstract**

A display device for a vehicle that is provided at a vehicle and that, when a detecting device detects a relative moving body, which is positioned at a periphery of the vehicle, in a predetermined detection range, can display a moving image representing the relative moving body, wherein, in a case in which a relative distance of the relative moving body from the vehicle is in a usual range, the display device for a vehicle changes a display condition, which is at least one of a size of and a displayed position of the moving image, in accordance with the relative distance, and, in a case in which the relative distance is outside of the usual range, the display device for a vehicle does not change the display condition.

## Description

### BACKGROUND

### Technical Field

The present disclosure relates to a display device for a vehicle, a display method for a vehicle, and a recording medium.

### Related Art

Japanese Patent Application Laid-Open (JP-A) No. 2021-117925 discloses a display device for a vehicle that can display an image representing a preceding vehicle that is positioned in front of a vehicle (the own vehicle).

The relative distance between the image that represents the own vehicle and the image that represents the preceding vehicle on the display device for a vehicle, and the size of the image that represents the preceding vehicle, may be varied in accordance with the relative distance between the vehicle (the own vehicle) and the preceding vehicle.

In this case, if the relative distance between the image representing the own vehicle and the image representing the preceding vehicle on the display device for a vehicle becomes too long or too short, there is the concern that the vehicle occupant who is looking at the display device for a vehicle will feel a sense of incongruity. Further, if the image representing the preceding vehicle becomes too large or too small, there is the concern that the vehicle occupant who is looking at the display device for a vehicle will feel a sense of incongruity.

In view of the above-described circumstances, an object of the present disclosure is to provide a display device for a vehicle, a display method for a vehicle, and a recording medium in which it is difficult for a vehicle occupant who is looking at a moving image, which represents a relative moving body positioned at the periphery of a vehicle, to feel a sense of incongruity in a case in which at least one of the size or the displayed position of the moving image is changed in accordance with the relative distance between the vehicle and the relative moving body.

### SUMMARY

A display device for a vehicle of a first aspect is a display device for a vehicle that is provided at a vehicle and that, when a detecting device detects a relative moving body, which is positioned at a periphery of the vehicle, in a predetermined detection range, can display a moving image representing the relative moving body, wherein, in a case in which a relative distance of the relative moving body from the vehicle is in a usual range, the display device for a vehicle changes a display condition, which is at least one of a size of or a displayed position of the moving image, in accordance with the relative distance, and, in a case in which the relative distance is outside of the usual range, the display device for a vehicle does not change the display condition.

The display device for a vehicle of the first aspect is provided at a vehicle. When a detecting device detects a relative moving body, which is positioned at the periphery of the vehicle, in a predetermined detection range, the display device for a vehicle can display a moving image that represents the relative moving body. Moreover, in a case in which the relative distance of the relative moving body from the vehicle is in a usual range, the display device for a vehicle changes the display condition, which is at least one of the size of or the displayed position of the moving image, in accordance with the relative distance. On the other hand, in a case in which the relative distance is outside of the usual range, the display device for a vehicle does not change the display condition. Accordingly, in the display device for a vehicle of the first aspect, it is difficult for a vehicle occupant who is looking at the moving image to feel a sense of incongruity.

In a display device for a vehicle of a second aspect, in the first aspect, in a case in which the relative distance is in the usual range, the display device for a vehicle gradually makes the moving image smaller as the relative distance becomes longer, and, given that a size of the moving image, of a time when the relative distance becomes a maximum value in a case in which the relative distance is in the usual range, is defined as a minimum dimension, the display device for a vehicle makes the size of the moving image, of a time when the relative distance is outside of the usual range and has become greater than the maximum value, be the minimum dimension.

In a case in which the relative distance between the vehicle and the relative moving body is in the usual range, the display device for a vehicle of the second aspect gradually makes the moving image smaller as the relative distance between the vehicle and the relative moving body becomes longer. Further, given that a size of the moving image, of the time when the relative distance becomes the maximum value in a case in which the relative distance is in the usual range, is defined as the minimum dimension, the display device for a vehicle of the second aspect makes the size of the moving image, of the time when the relative distance is outside of the usual range and has become greater than the maximum value, be the minimum dimension. Namely, when the relative distance is outside of the usual range and has become greater than the maximum value, the display device for a vehicle of the second aspect does not make the size of the moving image smaller than the minimum dimension. Accordingly, in the display device for a vehicle of the second aspect, when the relative distance is outside of the usual range and has become greater than the maximum value, it is difficult for a vehicle occupant who is looking at the moving image to feel a sense of incongruity.

In a display device for a vehicle of a third aspect, in the first aspect or the second aspect, in a case in which the relative distance is in the usual range, the display device for a vehicle gradually makes the moving image smaller as the relative distance becomes longer, and, given that a size of the moving image, of a time when the relative distance becomes a minimum value in a case in which the relative distance is in the usual range, is defined as a maximum dimension, the display device for a vehicle makes the size of the moving image, of a time when the relative distance is outside of the usual range and has become smaller than the minimum value, be the maximum dimension.

In a case in which the relative distance between the vehicle and the relative moving body is in the usual range, the display device for a vehicle of the third aspect gradually makes the moving image smaller as the relative distance between the vehicle and the relative moving body becomes longer. Further, given that a size of the moving image, of the time when the relative distance becomes the minimum value in a case in which the relative distance is in the usual range, is defined as a maximum dimension, the display device for a vehicle of the third aspect makes the size of the moving image, of the time when the relative distance is outside of the usual range and has become smaller than the minimum value, be the maximum dimension. Namely, when the relative distance is outside of the usual range and has become smaller than the minimum value, the display device for a vehicle of the third aspect does not make the size of the moving image larger than the maximum dimension. Accordingly, in the display device for a vehicle of the third aspect, when the relative distance is outside of the usual range and has become smaller than the minimum value, it is difficult for a vehicle occupant who is looking at the moving image to feel a sense of incongruity.

In a display device for a vehicle of a fourth aspect, in the first aspect, in a case in which the relative distance is in the usual range, the display device for a vehicle gradually makes the moving image smaller as the relative distance becomes longer, and, given that the size of the moving image, in a case in which the relative distance that is within the usual range is at an arbitrary first distance, is defined as a first dimension, the size of the moving image, in a case in which the relative distance that is within the usual range is at an arbitrary second distance that is longer than the first distance, is defined as a second dimension, the size of the moving image, in a case in which the relative distance that is within the usual range is at an arbitrary third distance that is longer than the second distance, is defined as a third dimension, and the size of the moving image, in a case in which the relative distance that is within the usual range is at an arbitrary fourth distance that is longer than the third distance, is defined as a fourth dimension, the display device for a vehicle makes a second dimension change amount, which is a value obtained by dividing, by the third dimension, a value obtained by subtracting the fourth dimension from the third dimension, be smaller than a first dimension change amount that is a value obtained by dividing, by the first dimension, a value obtained by subtracting the second dimension from the first dimension.

In a case in which the relative distance between the vehicle and the relative moving body is in the usual range, the display device for a vehicle of the fourth aspect gradually makes the moving image smaller as the relative distance becomes longer. Further, the display device for a vehicle of the fourth aspect makes the second dimension change amount, which is the value obtained by dividing, by the third dimension, the value obtained by subtracting the fourth dimension from the third dimension, be smaller than the first dimension change amount that is the value obtained by dividing, by the first dimension, the value obtained by subtracting the second dimension from the first dimension. Accordingly, in the display device for a vehicle of the fourth aspect, it is difficult for a vehicle occupant who is looking at the moving image to feel a sense of incongruity.

In a display device for a vehicle of a fifth aspect, in the first aspect, the display device for a vehicle can display a vehicle image representing the vehicle, in a case in which the relative distance is in the usual range, the display device for a vehicle gradually makes a displayed distance, which is a distance between the vehicle image and the moving image, longer as the relative distance becomes longer, and, given that the displayed distance, of a time when the relative distance becomes a maximum value in a case in which the relative distance is in the usual range, is defined as a maximum distance, the display device for a vehicle makes the displayed distance, of a time when the relative distance is outside of the usual range and has become greater than the maximum value, be the maximum distance.

The display device for a vehicle of the fifth aspect can display a vehicle image representing the vehicle. In a case in which the relative distance between the vehicle and the relative moving body is in the usual range, the display device for a vehicle gradually makes the displayed distance, which is the distance between the vehicle image and the moving image, longer as the relative distance becomes longer. Further, given that the displayed distance, of the time when the relative distance becomes the maximum value in a case in which the relative distance is in the usual range, is defined as a maximum distance, the display device for a vehicle of the fifth aspect makes the displayed distance, of the time when the relative distance is outside of the usual range and has become greater than the maximum value, be the maximum distance. Namely, when the relative distance is outside of the usual range and has become greater than the maximum value, the display device for a vehicle of the fifth aspect does not make the displayed distance of the moving image longer than the maximum distance. Accordingly, in the display device for a vehicle of the fifth aspect, when the relative distance is outside of the usual range and has become greater than the maximum value, it is difficult for the vehicle occupant who is looking at the moving image to feel a sense of incongruity.

In a display device for a vehicle of a sixth aspect, in the first aspect or the fifth aspect, the display device for a vehicle can display a vehicle image representing the vehicle, in a case in which the relative distance is in the usual range, the display device for a vehicle gradually makes a displayed distance, which is a distance between the vehicle image and the moving image, longer as the relative distance becomes longer, and, given that the displayed distance, of a time when the relative distance becomes a minimum value in a case in which the relative distance is in the usual range, is defined as a minimum distance, the display device for a vehicle makes the displayed distance, of a time when the relative distance is outside of the usual range and has become smaller than the minimum value, be the minimum distance.

The display device for a vehicle of the sixth aspect can display a vehicle image representing the vehicle. In a case in which the relative distance between the vehicle and the relative moving body is in the usual range, the display device for a vehicle gradually makes the displayed distance, which is the distance between the vehicle image and the moving image, longer as the relative distance becomes longer. Further, given that the displayed distance, of the time when the relative distance becomes the minimum value in a case in which the relative distance is in the usual range, is defined as a minimum distance, the display device for a vehicle of the sixth aspect makes the displayed distance, of the time when the relative distance is outside of the usual range and has become smaller than the minimum value, be the minimum distance. Namely, when the relative distance is outside of the usual range and has become smaller than the minimum value, the display device for a vehicle of the sixth aspect does not make the displayed distance of the moving image shorter than the minimum distance. Accordingly, in the display device for a vehicle of the sixth aspect, when the relative distance is outside of the usual range and has become smaller than the minimum value, it is difficult for the vehicle occupant who is looking at the moving image to feel a sense of incongruity.

In a display device for a vehicle of a seventh aspect, in the first aspect, the display device for a vehicle can display a vehicle image representing the vehicle, in a case in which the relative distance is in the usual range, the display device for a vehicle gradually makes a displayed distance, which is a distance between the vehicle image and the moving image, longer as the relative distance becomes longer, and, given that the displayed distance, in a case in which the relative distance that is within the usual range is at an arbitrary first distance, is defined as a first displayed distance, the displayed distance, in a case in which the relative distance that is within the usual range is at an arbitrary second distance that is longer than the first distance, is defined as a second displayed distance, the displayed distance, in a case in which the relative distance that is within the usual range is at an arbitrary third distance that is longer than the second distance, is defined as a third displayed distance, and the displayed distance, in a case in which the relative distance that is within the usual range is at an arbitrary fourth distance that is longer than the third distance, is defined as a fourth displayed distance, the display device for a vehicle makes a second distance change amount, which is a value obtained by dividing, by the third displayed distance, a value obtained by subtracting the third displayed distance from the fourth displayed distance, be smaller than a first distance change amount that is a value obtained by dividing, by the first displayed distance, a value obtained by subtracting the first displayed distance from the second displayed distance.

The display device for a vehicle of the seventh aspect can display a vehicle image representing the vehicle. In a case in which the relative distance between the vehicle and the relative moving body is in the usual range, the display device for a vehicle gradually makes the displayed distance, which is the distance between the vehicle image and the moving image, longer as the relative distance becomes longer. Further, the display device for a vehicle of the seventh aspect makes the second distance change amount, which is the value obtained by dividing, by the third displayed distance, the value obtained by subtracting the third displayed distance from the fourth displayed distance, be smaller than the first distance change amount that is the value obtained by dividing, by the first displayed distance, the value obtained by subtracting the first displayed distance from the second displayed distance. Accordingly, in the display device for a vehicle of the seventh aspect, it is difficult for a vehicle occupant who is looking at the moving image to feel a sense of incongruity.

In a display device for a vehicle of an eighth aspect, in the first aspect or the second aspect, the vehicle can execute drive assist control, and the display device for a vehicle changes a size of the usual range in accordance with a level of the drive assist control.

The display device for a vehicle of the eighth aspect makes it easy for the vehicle occupant to recognize that the relative moving body is being recognized.

In a display device for a vehicle of a ninth aspect, in the eighth aspect, the display device for a vehicle expands the usual range as the level of the drive assist control increases.

The display device for a vehicle of the ninth aspect makes it easy for the vehicle occupant to recognize that the relative moving body is being recognized.

In a display device for a vehicle of a tenth aspect, in the eighth aspect, the display device for a vehicle makes a maximum value of the usual range larger as the level of the drive assist control increases.

The display device for a vehicle of the tenth aspect makes it easy for the vehicle occupant to recognize that the relative moving body is being recognized.

A display method for a vehicle of an eleventh aspect is a display method for a vehicle that, by a display device for a vehicle that can control a display device that is provided at a vehicle and that, when a detecting device detects a relative moving body, which is positioned at a periphery of the vehicle, in a predetermined detection range, can display a moving image representing the relative moving body: in a case in which a relative distance of the relative moving body from the vehicle is in a usual range, changes a display condition, which is at least one of a size of or a displayed position of the moving image, in accordance with the relative distance; and, in a case in which the relative distance is outside of the usual range, does not change the display condition.

A recording medium relating to a twelfth aspect is a recording medium storing a program executable by a computer in order to execute a processing, the processing including: causing a display device provided at a vehicle to display a moving image representing a relative moving body, which is positioned at a periphery of the vehicle, when a detecting device detects the relative moving body in a predetermined detection range; in a case in which a relative distance of the relative moving body from the vehicle is in a usual range, changing a display condition, which is at least one of a size of or a displayed position of the moving image, in accordance with the relative distance; and, in a case in which the relative distance is outside of the usual range, not changing the display condition.

As described above, the display device for a vehicle, display method for a vehicle, and recording medium relating to the present disclosure have the excellent effect that it is difficult for a vehicle occupant who is looking at a moving image, which represents a relative moving body positioned at the periphery of the vehicle, to feel a sense of incongruity in a case in which at least one of the size or the displayed position of the moving image is changed in accordance with the relative distance between the vehicle and the relative moving body.

### BRIEF DESCRIPTION OF THE DRAWINGS

An exemplary embodiment of the present disclosure will be described in detail based on the following figures, wherein:
Fig. 1 is a drawing illustrating the interior of a vehicle equipped with a display device for a vehicle relating to an embodiment;
Fig. 2 is a drawing illustrating hardware structures of the vehicle illustrated in Fig. 1;
Fig. 3 is a functional block drawing of a display control ECU illustrated in Fig. 2;
Fig. 4 is a functional block drawing of an ADAS-ECU illustrated in Fig. 2;
Fig. 5 is a drawing illustrating the display device that is displaying a vehicle image representing a vehicle, a road image representing the road on which the vehicle is traveling, and a preceding vehicle image representing a preceding vehicle;
Fig. 6 is a drawing illustrating an image dimension determining map expressing the relationship between relative distance (detected distance) between the vehicle and the preceding vehicle, and the size of the preceding vehicle image;
Fig. 7 is a drawing illustrating a displayed position determining map expressing the relationship between relative distance (detected distance) between the vehicle and the preceding vehicle, and the displayed position of the preceding vehicle image;
Fig. 8 is a flowchart illustrating a processing executed by the CPU of the display control ECU;
Fig. 9 is a drawing illustrating an image dimension determining map of a first modified example;
Fig. 10 is a drawing illustrating a displayed position determining map of a second modified example;
Fig. 11 is a plan view illustrating the vehicle, the road on which the vehicle is traveling, and the preceding vehicles of a third modified example;
Fig. 12 is a drawing of the third modified example that is similar to Fig. 5; and
Fig. 13 is a plan view illustrating the vehicle, the road on which the vehicle is traveling, and the preceding vehicles of a fourth modified example.

### DETAILED DESCRIPTION

An embodiment of a display device for a vehicle, a display method for a vehicle, and a recording medium relating to the present disclosure are described with reference to the drawings. Arrow FR that is shown appropriately in the drawings indicates the front side in the vehicle longitudinal direction, arrow LH indicates the left side in the vehicle left-right direction, and arrow UP indicates the upper side in the vehicle vertical direction.

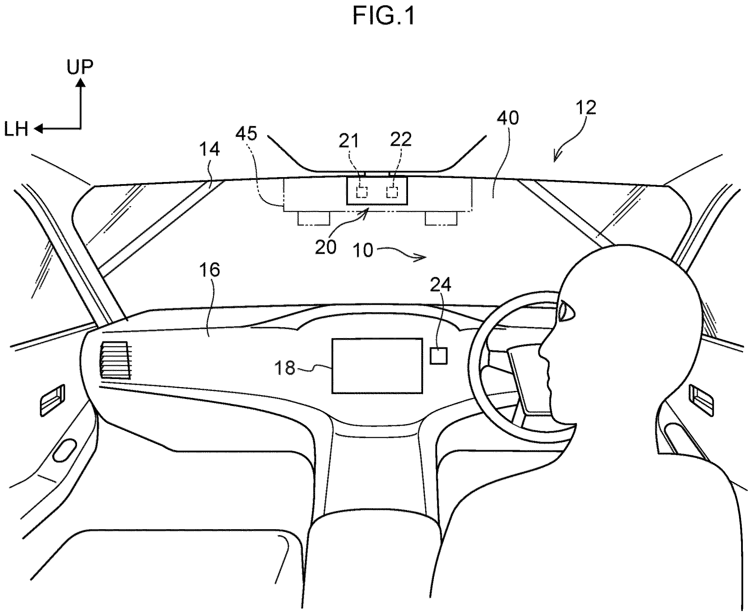

As illustrated in Fig. 1, vehicle 12, to which a display device for a vehicle of the present embodiment is applied, has a front windshield 14 and an instrument panel 16. A display device (display device for a vehicle) 18 and a drive assist switch 24 are provided at the instrument panel 16. As will be described later, the display device 18 can display various images including a road image 50, a vehicle image 55, and a preceding vehicle image (moving image) 60. A sensor unit (detecting device) 20 is provided at the upper portion of the vehicle inner side surface of the front windshield 14. The sensor unit 20 has a camera 21 and a millimeter wave sensor 22. The camera 21 can capture images of subjects that are positioned further toward the vehicle front side than the camera 21 itself. The millimeter wave sensor 22 transmits search waves forward, and receives reflected waves. Namely, the camera 21 and the millimeter wave sensor 22 can detect objects that are positioned in a predetermined detection range. The drive assist switch 24 is a switch for causing the vehicle 12 to execute drive assist control that is described later.

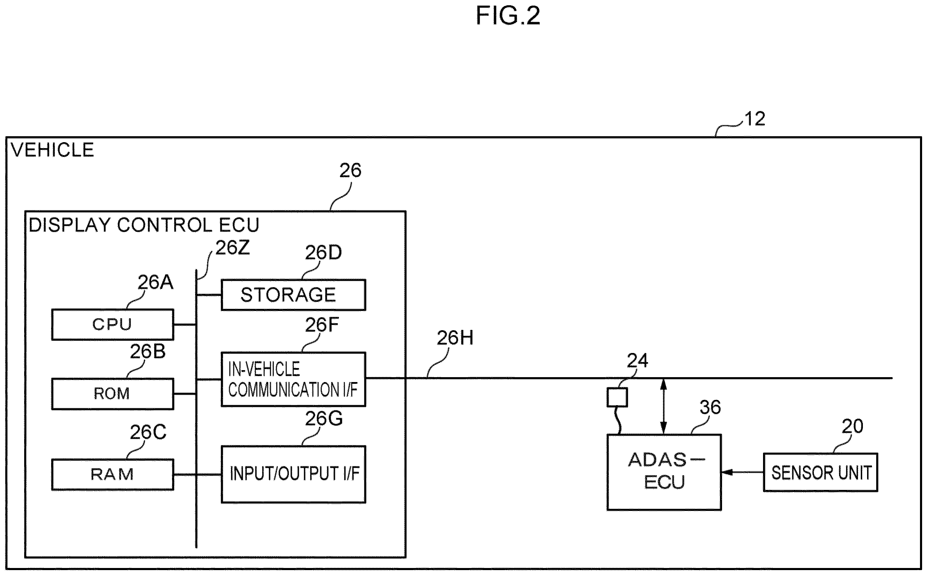

As illustrated in Fig. 2, in addition to the sensor unit 20 and the drive assist switch 24, the vehicle 12 has a display control ECU (Electronic Control Unit) 26 and an ADAS-ECU 36 as hardware structures thereof.

The display control ECU 26 is structured to include a CPU (Central Processing Unit) (processor) (computer) 26A, a ROM (Read Only Memory) (recording medium) (storage medium) 26B, a RAM (Random Access Memory) 26C, a storage (recording medium) (storage medium) 26D, an in-vehicle communication I/F 26F, and an input/output I/F 26G. The CPU 26A, the ROM 26B, the RAM 26C, the storage 26D, the in-vehicle communication I/F 26F and the input/output I/F 26G are connected so as to be able to communicate with one another via internal bus 26Z.

The CPU 26A is a central computing processing unit, and executes various programs and controls the respective sections. The CPU 26A reads-out a program from the ROM 26B or the storage 26D, and executes the program by using the RAM 26C as a workspace. The CPU 26A carries out control of the respective structures, and various computing processings, in accordance with programs recorded in the ROM 26B or the storage 26D.

The ROM 26B stores various programs and various data. The RAM 26C temporarily stores programs and data as a workspace. The storage 26D is structured by a storage device such as an HDD (Hard Disk Drive) or an SSD (Solid State Drive) or the like, and stores various programs and various data.

The in-vehicle communication I/F 26F is an interface for connecting with the ADAS-ECU 36 via an external bus 26H. Communication standards in accordance with CAN protocol for example are used at this interface.

The input/output I/F 26G is an interface for communication with various devices.

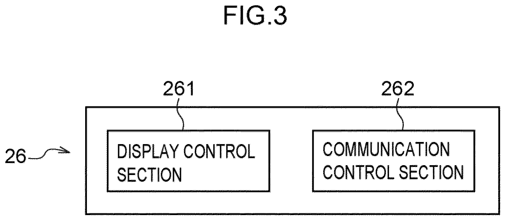

An example of functional structures of the display control ECU 26 is illustrated in a block drawing in Fig. 3. The display control ECU 26 has a display control section 261 and a communication control section 262 as the functional structures thereof. The display control section 261 and the communication control section 262 are realized due to the CPU 26A reading-out and executing a program stored in the ROM 26B.

The display control section 261 controls the display device 18. Detailed description of the functions of the display control section 261 is given later.

The communication control section 262 controls the in-vehicle communication I/F 26F.

The ADAS-ECU 36 is structured to include a CPU, a ROM (recording medium) (storage medium), a RAM, a storage (recording medium) (storage medium), an in-vehicle communication I/F, and an input/output I/F. These are connected so as to be able to communicate with one another via an internal bus.

The ADAS-ECU 36 is connected to the sensor unit 20. Further, the ADAS-ECU 36 is connected to various actuators that are for driving the accelerator device, the brake device and the steering device. The vehicle 12 has an electric motor (an actuator) as the drive source thereof. The ADAS-ECU 36 is connected to the electric motor. However, the drive source of the vehicle 12 may include an internal combustion engine.

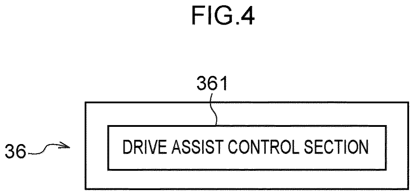

An example of the functional structures of the ADAS-ECU 36 is illustrated in a block drawing in Fig. 4. The ADAS-ECU 36 has a drive assist control section 361 as the functional structure thereof. The drive assist control section 361 is realized by the CPU reading-out and executing a program stored in the ROM.

Due to the drive assist control section 361 controlling the above-described group of actuators, the vehicle 12 executes drive assist control of driving levels 1 through 5 that are set by SAE (Society of Automotive Engineers). For example, the vehicle 12 can execute ACC (Adaptive Cruise Control, level 1). The drive assist switch 24 is switched between an on state and an off state by being operated by a vehicle occupant. When the drive assist switch 24 is set in the on state, the vehicle 12 can execute drive assist control. Moreover, by operating the drive assist switch 24 that is in the on state in a case in which predetermined conditions are satisfied, the vehicle occupant can cause the vehicle 12 to execute an arbitrary drive assist control among levels 1 through 5. The vehicle occupant can also cause the vehicle to travel at level 0. When the level of the drive assist control is 0, either drive assist control basically is not executed, or the functions of the drive assist control that is executed are limited functions. Hereinafter, description will be given of a case during execution of ACC.

Here, a case in which the vehicle 12 is traveling forward on a rectilinear road 40, and a preceding vehicle (relative moving body) 45 that is positioned further forward than the vehicle 12 is traveling forward on the road 40, is supposed as illustrated in Fig. 1. In this case, when the vehicle 12 executes ACC due to the drive assist switch 24 being operated, on the basis of data transmitted from the sensor unit 20 to the ADAS-ECU 36, the drive assist control section 361 recognizes the existence of the preceding vehicle 45, the relative distance (the detected distance) of the preceding vehicle 45 with respect to the vehicle 12, and the relative position of the preceding vehicle 45 with respect to the vehicle 12. Moreover, the drive assist control section 361 controls the above-described group of actuators such that the inter-vehicle distance between the vehicle 12 and the preceding vehicle 45 is maintained at a set distance that is an inter-vehicle distance that a vehicle occupant has set by using the drive assist switch 24.

The functions of the display control section 261 are described in detail next.

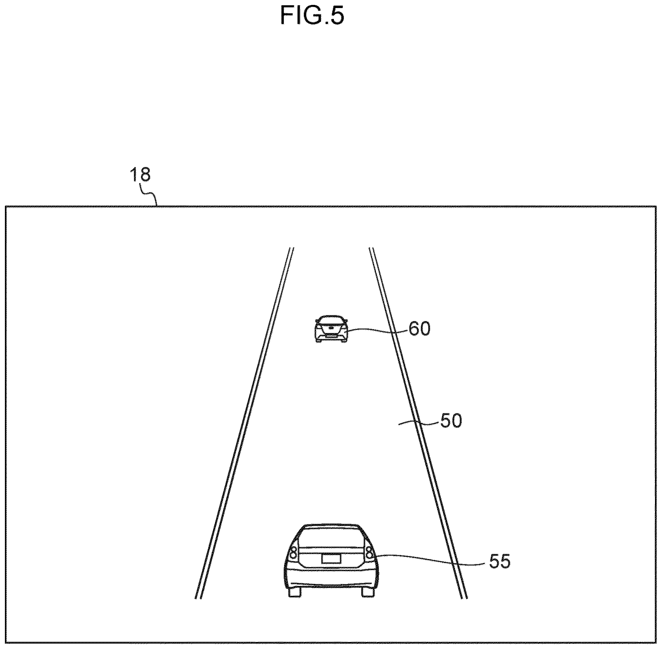

As illustrated in Fig. 5, while the drive assist control section 361 is executing ACC, the display control section 261 causes the display device 18 to display the road image 50 representing the road 40 and the vehicle image 55 representing the vehicle 12. The displayed position of the vehicle image 55 on the display device 18 is fixed. Moreover, when the drive assist control section 361 recognizes the preceding vehicle 45, as illustrated in Fig. 5, the display control section 261 causes the display device 18 to display the preceding vehicle image 60 that represents the preceding vehicle 45. In other words, when the sensor unit 20 detects the preceding vehicle 45 while the drive assist control section 361 is executing ACC, the display control section 261 causes the display device 18 to display the preceding vehicle image 60.

Further, on the basis of information relating to the aforementioned relative position and relative distance of the preceding vehicle 45 that is received from the ADAS-ECU 36 during execution of ACC, the display control section 261 recognizes the relative position and the relative distance of the preceding vehicle 45 with respect to the vehicle 12.

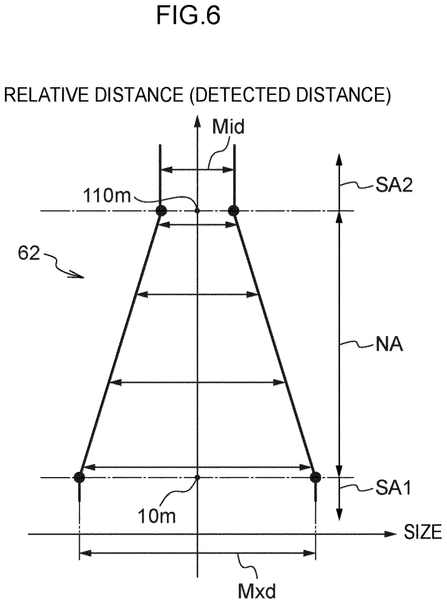

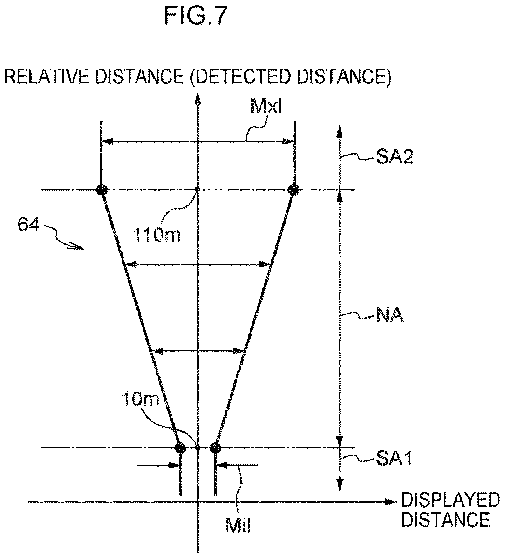

Moreover, in a case in which the display control section 261 causes the display device 18 to display the preceding vehicle image 60, the display control section 261 changes the form of display of the preceding vehicle image 60 on the display device 18 by using an image dimension determining map 62 (see Fig. 6) and a displayed position determining map 64 (see Fig. 7) that are recorded in the ROM 26B or the storage 26D.

The image dimension determining map 62 expresses the relationship between the relative distance (detected distance) between the vehicle 12 and the preceding vehicle 45, and the size (display condition) of the preceding vehicle image 60 on the display device 18. In a case in which ACC is being executed, the range of relative distances between 10 m and 110 m is defined in the image dimension determining map 62 as usual range NA. The range of relative distances that are shorter than 10 m is a first special range SA1, and the range of relative distances that are longer than 110 m is a second special range SA2. In a case in which the aforementioned relative distance is in the usual range NA, the image dimension determining map 62 prescribes that the relative distance between the vehicle 12 and the preceding vehicle 45, and the size (dimension) of the preceding vehicle image 60 on the display device 18, are to be made to be proportional. Namely, in a case in which the aforementioned relative distance is in the usual range NA, the preceding vehicle image 60 gradually becomes smaller as the relative distance between the vehicle 12 and the preceding vehicle 45 becomes longer. Here, the size of the preceding vehicle image 60, of the time when the relative distance between the vehicle 12 and the preceding vehicle 45 becomes the maximum value (110 m) in a case in which the relative distance is in the usual range NA, is defined as minimum dimension Mid. Moreover, the size of the preceding vehicle image 60, of the time when the relative distance between the vehicle 12 and the preceding vehicle 45 becomes the minimum value (10 m) in a case in which the relative distance is in the usual range NA, is defined as maximum dimension Mxd. Moreover, the image dimension determining map 62 prescribes that the size of the preceding vehicle image 60, of the time when the relative distance between the vehicle 12 and the preceding vehicle 45 is in the second special range SA2, is to be maintained at the minimum dimension Mid. Moreover, the image dimension determining map 62 prescribes that the size of the preceding vehicle image 60, of the time when the relative distance between the vehicle 12 and the preceding vehicle 45 is in the first special range SA1, is to be maintained at the maximum dimension Mxd. Note that, in a case in which the level of the drive assist control is 0 (manual driving), the usual range NA is a range of relative distances between 10 m and 40 m. In a case in which the level of the drive assist control differs from ACC, the size of the preceding vehicle image 60 on the display device 18 may be defined on the basis of the image dimension determining map 62 that is used exclusively for such cases, or the size of the preceding vehicle image 60 may be defined on the basis of the image dimension determining map 62 that is similar to that at the time of ACC operation except for the point that the usual ranges NA are different. In this way, the usual range NA may be varied in accordance with the level of the drive assist control. In further detail, the size of the preceding vehicle image 60 may be defined on the basis of the image dimension determining map 62 that expands the usual range NA as the level of the drive assist control increases. When the level increases and the drive assist range that is handled by the drive assist control section 361 becomes large, the operations that the vehicle occupant must execute decrease relatively. Therefore, in a case in which the level of the drive assist control increases, in order to reassure the vehicle occupant, the need to let the vehicle occupant know that the drive assist control section 361 is recognizing the preceding vehicle 45 increases. Therefore, if the usual range NA is expanded as the level of the drive assist control increases, it is easy for the vehicle occupant to recognize that the drive assist control section 361 is recognizing the preceding vehicle 45, and the vehicle occupant can be reassured. For example, in a case in which steering assist, which is a level 2 drive assist control, operates in addition to the drive assist control of acceleration/deceleration that is a level 1 drive assist control, the maximum value of the usual range NA may be made to be larger as compared with a case in which level 1 drive assist control is being executed. For example, in this case, the usual range NA may be made to be a range of relative distances between 10 m and 130 m. Note that, in a case in which the level of the drive assist control increases, the minimum value of the usual range NA may be made to be smaller.

The displayed position determining map 64 expresses the relationship between the relative distance (detected distance) between the vehicle 12 and the preceding vehicle 45, and the displayed position (display condition) of the preceding vehicle image 60 on the display device 18. In other words, the displayed position determining map 64 expresses the relationship between the relative distance between the vehicle 12 and the preceding vehicle 45, and the displayed distance that is the distance between the vehicle image 55 and the preceding vehicle image 60 on the display device 18. In the displayed position determining map 64, the range of relative distances between 10 m and 110 m is defined as the usual range NA. The range of relative distances that are shorter than 10 m is the first special range SA1, and the range of relative distances that are longer than 110 m is the second special range SA2. The displayed position determining map 64 prescribes that, in a case in which the aforementioned relative distance is in the usual range NA, the relative distance between the vehicle 12 and the preceding vehicle 45, and the displayed distance of the preceding vehicle image 60 on the display device 18, are to be made to be proportional. Namely, in a case in which the aforementioned relative distance is in the usual range NA, the displayed distance gradually becomes longer as the relative distance between the vehicle 12 and the preceding vehicle 45 becomes longer. Here, the displayed distance of the preceding vehicle image 60, of the time when the relative distance between the vehicle 12 and the preceding vehicle 45 becomes the maximum value (110 m) in a case in which the relative distance is in the usual range NA, is defined as maximum distance Mxl. Further, the displayed distance of the preceding vehicle image 60, of the time when the aforementioned relative distance between the vehicle 12 and the preceding vehicle 45 becomes the minimum value (10 m) in a case in which the relative distance is in the usual range NA, is defined as minimum distance Mil. Moreover, the displayed position determining map 64 prescribes that the displayed distance of the preceding vehicle image 60 when the relative distance between the vehicle 12 and the preceding vehicle 45 is in the second special range SA2, is to be maintained at the maximum distance Mxl. The displayed position determining map 64 prescribes that the displayed distance of the preceding vehicle image 60 when the relative distance between the vehicle 12 and the preceding vehicle 45 is in the first special range SA1, is to be maintained at the minimum distance Mil.

In the present specification, the form of display of the preceding vehicle image 60 on the display device 18, which is prescribed by the image dimension determining map 62 and the displayed position determining map 64 in a case in which the relative distance between the vehicle 12 and the preceding vehicle 45 is in the usual range NA, is called the changing mode. Further, the form of display of the preceding vehicle image 60 on the display device 18, which is prescribed by the image dimension determining map 62 and the displayed position determining map 64 in a case in which the aforementioned relative distance is in the first special range SA1 or the second special range SA2, is called the fixed mode.

### (Operation and Effects)

Operation and effects of the present embodiment are described next.

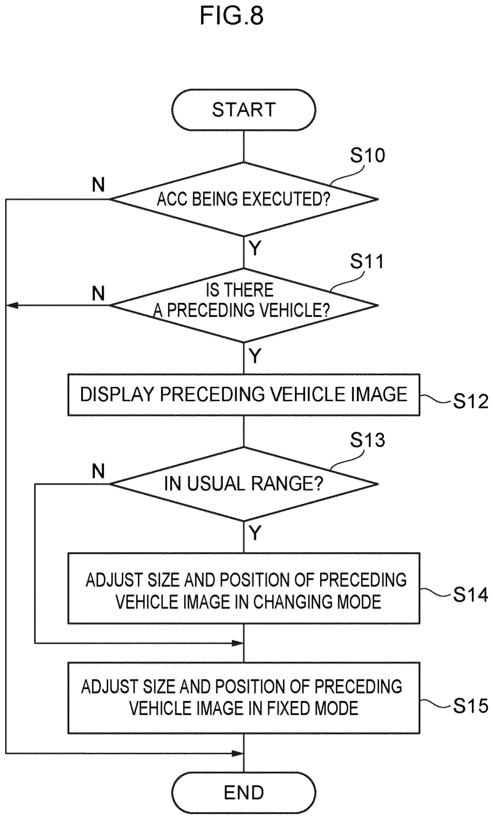

Next, the processing executed by the CPU 26A of the display control ECU 26 is described. The CPU 26A repeatedly executes the processing of the flowchart illustrated in Fig. 8 each time that a predetermined time period elapses.

In step S10 (hereinafter, the word "step" is omitted), the CPU 26A judges whether or not the vehicle 12 (the ADAS-ECU 36) is currently executing ACC. If the judgment in S10 is Yes, the CPU 26A moves on to S11.

In S11, on the basis of information received from the ADAS-ECU 36, the CPU 26A judges whether or not the drive assist control section 361 is recognizing the preceding vehicle 45. If the judgment in S11 is Yes, the CPU 26A moves on to S12.

In S12, the CPU 26A causes the display device 18 to display the preceding vehicle image 60.

The CPU 26A that has finished the processing of S12 moves on to S13, and, on the basis of information received from the ADAS-ECU 36, judges whether or not the relative distance between the vehicle 12 and the preceding vehicle 45 is included in the usual range NA.

If the judgment in S13 is Yes, the CPU 26A moves on to S14, and causes the display device 18 to display the preceding vehicle image 60 on the basis of the changing mode.

If the judgement in S13 is No, the CPU 26A moves on to S15, and causes the display device 18 to display the preceding vehicle image 60 on the basis of the fixed mode.

If the judgement in S10 or S11 is No, or when the processing of S 15 is finished, the CPU 26A ends the processing of the flowchart of Fig. 8 for the time being.

As described above, the display device 18 of the present embodiment can display the preceding vehicle image 60 that represents the preceding vehicle 45, when the sensor unit 20 detects the preceding vehicle 45, which is positioned at the periphery of the vehicle 12, in a predetermined detection range. Moreover, in a case in which the relative distance between the vehicle 12 and the preceding vehicle 45 is in the usual range NA, the display device 18 makes the relative distance between the vehicle 12 and the preceding vehicle 45, and the size of the preceding vehicle image 60 on the display device 18, be proportional to one another, and makes the relative distance between the vehicle 12 and the preceding vehicle 45, and the displayed distance of the preceding vehicle image 60 from the vehicle image 55 on the display device 18, be proportional to one another. Namely, the display device 18 makes the size of the preceding vehicle image 60, of the time when the relative distance between the vehicle 12 and the preceding vehicle 45 becomes the maximum value (110 m) in a case in which the relative distance in the usual range NA, be the minimum dimension Mid, and makes the size of the preceding vehicle image 60, of the time when the aforementioned relative distance becomes the minimum value (10 m) in a case in which the relative distance is in the usual range NA, be the maximum dimension Mxd. Further, the display device 18 makes the displayed distance of the preceding vehicle image 60, of the time when the aforementioned relative distance becomes the maximum value in a case in which the relative distance is in the usual range NA, be the maximum distance Mxl, and makes the displayed distance of the preceding vehicle image 60, of the time when the aforementioned relative distance becomes the minimum value in a case in which the relative distance is in the usual range NA, be the minimum distance Mil. Therefore, in a case in which the relative distance between the vehicle 12 and the preceding vehicle 45 is in the usual range NA, it is easy for the vehicle occupant who is looking at the display device 18 to get a feel of the distance between the vehicle 12 and the preceding vehicle 45.

By the way, if the size of the preceding vehicle image 60 of the time when the relative distance between the vehicle 12 and the preceding vehicle 45 is in the second special range SA2 is made even smaller than the minimum dimension Mid, or if the size of the preceding vehicle image 60 of the time when the aforementioned relative distance is in the first special range SA1 is made even larger than the maximum dimension Mxd, it is easy for the vehicle occupant who is looking at the display device 18 to feel a sense of incongruity. However, the display device 18 of the present embodiment maintains the size of the preceding vehicle image 60, of the time when the aforementioned relative distance is in the second special range SA2, at the minimum dimension Mid, and maintains the size of the preceding vehicle image 60, of the time when the aforementioned relative distance is in the first special range SA1, at the maximum dimension Mxd. Accordingly, even in a case in which the relative distance between the vehicle 12 and the preceding vehicle 45 is outside of the usual range NA, the display device 18 can cause the vehicle occupant to understand that the drive assist control section 361 is recognizing the preceding vehicle 45, and it is difficult for the vehicle occupant who is looking at the preceding vehicle image 60 to feel a sense of incongruity.

If the displayed distance of the preceding vehicle image 60 of the time when the relative distance between the vehicle 12 and the preceding vehicle 45 is in the second special range SA2 is made even longer than the maximum distance Mxl, or if the displayed distance of the preceding vehicle image 60 of the time when the aforementioned relative distance is in the first special range SA1 is made even shorter than the minimum distance Mil, it is easy for the vehicle occupant who is looking at the display device 18 to feel a sense of incongruity. However, the display device 18 of the present embodiment maintains the displayed distance of the preceding vehicle image 60, of the time when the aforementioned relative distance is in the second special range SA2, at the maximum distance Mxl, and maintains the displayed distance of the preceding vehicle image 60, of the time when the aforementioned distance is in the first special range SA1, at the minimum distance Mil. Accordingly, in a case in which the relative distance between the vehicle 12 and the preceding vehicle 45 is outside of the usual range NA, it is difficult for the vehicle occupant who is looking at the preceding vehicle image 60 on the display device 18 to feel a sense of incongruity.

Moreover, if the displayed distance of the preceding vehicle image 60 of the time when the relative distance between the vehicle 12 and the preceding vehicle 45 is in the second special range SA2 is made even longer than the maximum distance Mxl, or if the displayed distance of the preceding vehicle image 60 of the time when the aforementioned relative distance is in the first special range SA1 is made even shorter than the minimum distance Mil, it is easy for the dimension that is required of the display device 18 (the vertical dimension in Fig. 1) to become large. However, the display device 18 maintains the displayed distance of the preceding vehicle image 60, of the time when the aforementioned relative distance is in the second special range SA2, at the maximum distance Mxl, and maintains the displayed distance of the preceding vehicle image 60, of the time when the aforementioned relative distance is in the first special range SA1, at the minimum. Therefore, the dimensions of the display device 18 are prevented from becoming excessively large.

A display device for a vehicle, a display method for a vehicle, and a recording medium relating to embodiments have been described above, but the designs thereof can be changed appropriately within a scope that does not depart from the gist of the present disclosure.

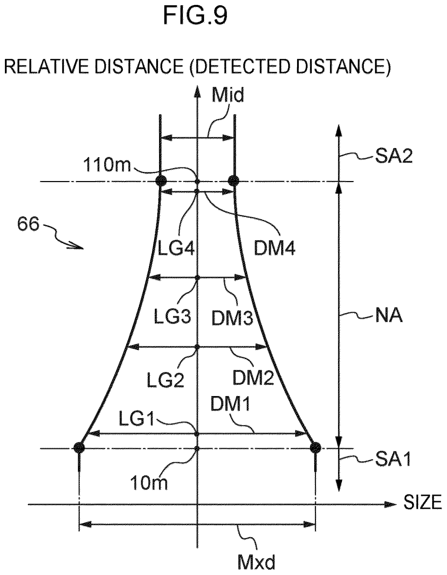

For example, the present disclosure may be embodied in the form of a first modified example illustrated in Fig. 9. In the first modified example, the size of the preceding vehicle image 60 on the display device 18 is controlled in accordance with an image dimension determining map 66. The prescribed contents of the size of the preceding vehicle image 60 that are put forth in the image dimension determining map 66 for the time when the relative distance between the vehicle 12 and the preceding vehicle 45 is in the usual range NA, are different than those of the image dimension determining map 62. On the other hand, the prescribed contents of the size of the preceding vehicle image 60 that are put forth in the image dimension determining map 66 for the time when the relative distance between the vehicle 12 and the preceding vehicle 45 is in the first special range SA1 or in the second special range SA2, are the same as those of the image dimension determining map 62.

The image dimension determining map 66 as well prescribes that, in a case in which the aforementioned relative distance is in the usual range NA, the preceding vehicle image 60 gradually becomes smaller as the relative distance between the vehicle 12 and the preceding vehicle 45 becomes longer. However, in the image dimension determining map 66, the relative distance between the vehicle 12 and the preceding vehicle 45, and the size (dimension) of the preceding vehicle image 60, are not proportional. Here, as illustrated in Fig. 9, the size of the preceding vehicle image 60, in a case in which the aforementioned relative distance is at an arbitrary first distance LG1 that is included in the usual range NA, is defined as first dimension DM1. The size of the preceding vehicle image 60, in a case in which the aforementioned relative distance is included in the usual range NA and is at an arbitrary second distance LG2 that is longer than the first distance LG1, is defined as second dimension DM2. The size of the preceding vehicle image 60, in a case in which the aforementioned relative distance is included in the usual range NA and is at an arbitrary third distance LG3 that is longer than the second distance LG2, is defined as third dimension DM3. The size of the preceding vehicle image 60, in a case in which the aforementioned relative distance is included in the usual range NA and is at an arbitrary fourth distance LG4 that is longer than the third distance LG3, is defined as fourth dimension DM4. Further, the image dimension determining map 66 prescribes that a second dimension change amount, which is a value obtained by dividing, by the third dimension DM3, the value obtained by subtracting the fourth dimension DM4 from the third dimension DM3, is to be made smaller than a first dimension change amount that is a value obtained by dividing, by the first dimension DM1, a value obtained by subtracting the second dimension DM2 from the first dimension DM1. Therefore, as illustrated in Fig. 9, the graph (function) expressing the relationship between the relative distance between the vehicle 12 and the preceding vehicle 45 in the usual range NA, and the size of the preceding vehicle image 60, is a curve and not a straight line. Therefore, when the size of the preceding vehicle image 60 on the display device 18 is changed on the basis of this image dimension determining map 66, it is even more difficult for the vehicle occupant who is looking at the preceding vehicle image 60 to feel a sense of incongruity than in a case in which the vehicle occupant looks at the preceding vehicle image 60 whose size is varied on the basis of the image dimension determining map 62.

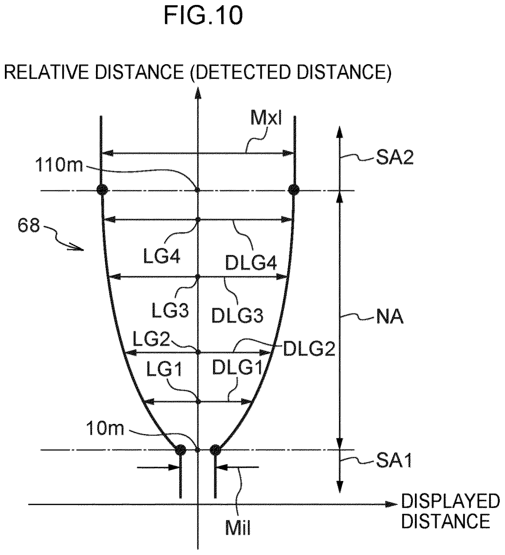

The present disclosure may be embodied in the form of a second modified example illustrated in Fig. 10. In the second modified example, the displayed distance between the vehicle image 55 and the preceding vehicle image 60 on the display device 18 is controlled in accordance with a displayed position determining map 68. The prescribed contents of the displayed distance of the preceding vehicle image 60 on the display device 18 that are put forth in the displayed position determining map 68 for the time when the relative distance between the vehicle 12 and the preceding vehicle 45 is in the usual range NA, are different than those of the displayed position determining map 64. On the other hand, the prescribed contents of the displayed distance of the preceding vehicle image 60 that are put forth in the displayed position determining map 68 for the time when the relative distance between the vehicle 12 and the preceding vehicle 45 is in the first special range SA1 or in the second special range SA2, are the same as those of the displayed position determining map 64.

The displayed position determining map 68 as well prescribes that, in a case in which the aforementioned relative distance is in the usual range NA, the displayed distance of the preceding vehicle image 60 gradually becomes longer as the relative distance between the vehicle 12 and the preceding vehicle 45 becomes longer. However, in the displayed position determining map 68, the relative distance between the vehicle 12 and the preceding vehicle 45, and the displayed distance of the preceding vehicle image 60, are not proportional. Here, as illustrated in Fig. 10, the displayed distance of the preceding vehicle image 60, in a case in which the aforementioned relative distance is at the arbitrary first distance LG1 that is included in the usual range NA, is defined as first displayed distance DLG1. The displayed distance of the preceding vehicle image 60, in a case in which the aforementioned distance is included in the usual range NA and is at the arbitrary second distance LG2 that is longer than the first distance LG1, is defined as second displayed distance DLG2. The displayed distance of the preceding vehicle image 60, in a case in which the aforementioned relative distance is included in the usual range NA and is at the arbitrary third distance LG3 that is longer than the second distance LG2, is defined as third displayed distance DLG3. The displayed distance of the preceding vehicle image 60, in a case in which the aforementioned relative distance is included in the usual range NA and is at the arbitrary fourth distance LG4 that is longer than the third distance LG3, is defined as fourth displayed distance DLG4. Further, the displayed position determining map 68 prescribes that a second distance change amount, which is a value obtained by dividing, by the third displayed distance DLG3, the value obtained by subtracting the third displayed distance DLG3 from the fourth displayed distance DLG4, is to be made smaller than a first distance change amount that is a value obtained by dividing, by the first displayed distance DLG1, the value obtained by subtracting the first displayed distance DLG1 from the second displayed distance DLG2. Therefore, as illustrated in Fig. 10, the graph (function) expressing the relationship between the relative distance between the vehicle 12 and the preceding vehicle 45 in the usual range NA, and the displayed distance of the preceding vehicle image 60, is a curve and not a straight line. Therefore, when the displayed distance of the preceding vehicle image 60 on the display device 18 is changed on the basis of this displayed position determining map 68, it is even more difficult for the vehicle occupant who is looking at the preceding vehicle image 60 to feel a sense of incongruity than in a case in which the vehicle occupant looks at the preceding vehicle image 60 whose displayed distance is varied on the basis of the displayed position determining map 64.

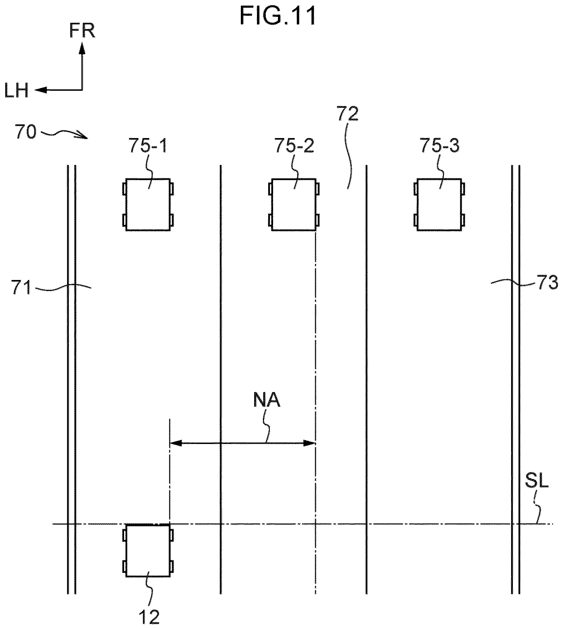

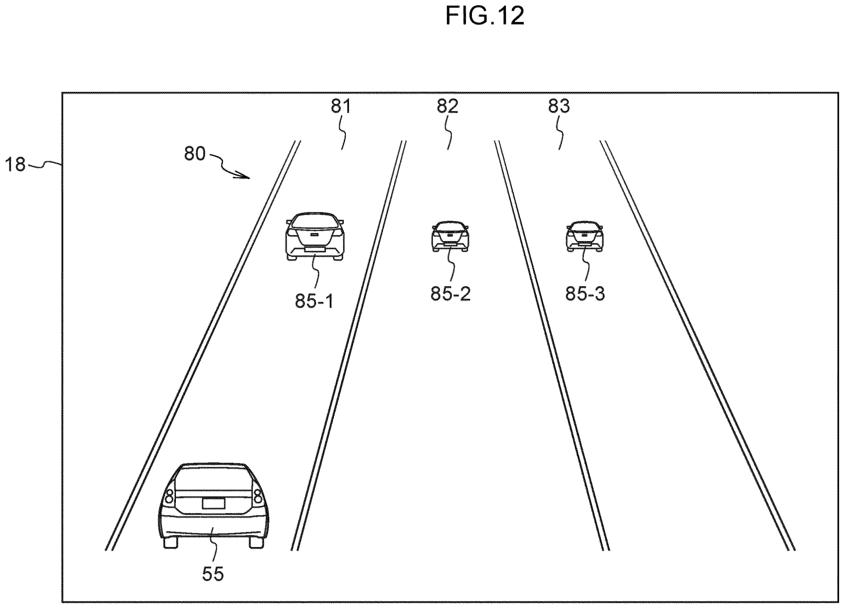

The present disclosure may be embodied in the form of a third modified example illustrated in Fig. 11 and Fig. 12. In this case, as illustrated in Fig. 11, it is assumed that the vehicle 12 is traveling in a first lane 71 that is the leftmost lane of a road 70 that has the first lane 71, a second lane 72 and a third lane 73 that are three vehicle lanes. Moreover, preceding vehicles (relative moving bodies) 75-1, 75-2, 75-3 that are positioned further forward than the vehicle 12 are traveling in the first lane 71, the second lane 72 and the third lane 73, respectively. Here, a straight line that passes along the distal end (front end) of the vehicle 12 in the transverse direction of the road 70 (the left-right direction) is defined as SL. The respective distances, along the direction in which the road 70 extends, from the straight line SL to the preceding vehicles 75-1, 75-2, 75-3, are defined as the relative distances between the vehicle 12 and the preceding vehicles 75-1, 75-2, 75-3, respectively. In the state illustrated in Fig. 11, the respective relative distances between the vehicle 12 and the preceding vehicles 75-1, 75-2, 75-3 are the same. In other words, the preceding vehicles 75-1, 75-2, 75-3 are lined-up in the left-right direction.

Therefore, first lane image 81, second lane image 82 and third lane image 83, which correspond to the first lane 71, the second lane 72 and the third lane 73 respectively, are included in road image 80 that is displayed on the display device 18 illustrated in Fig. 12. Moreover, preceding vehicle image (moving image) 85-1 corresponding to the preceding vehicle 75-1 is displayed on the first lane image 81, preceding vehicle image (moving image) 85-2 corresponding to the preceding vehicle 75-2 is displayed on the second lane image 82, and preceding vehicle image (moving image) 85-3 corresponding to the preceding vehicle 75-3 is displayed on the third lane image 83. The preceding vehicle images 85-1, 85-2, 85-3 are lined-up in the left-right direction on the display device 18. Moreover, the preceding vehicle images 85-1, 85-2, 85-3 are displayed on the display device 18 as vehicles of the same vehicle type.

Here, as illustrated in Fig. 11, a range in which the left-right direction distance from the vehicle 12 is less than or equal to a predetermined distance (e.g., 6 m), is defined as the usual range NA. In the example of Fig. 11, the range between the left-right direction position of the vehicle 12 and the left-right direction position of the preceding vehicle 75-2 is the usual range NA. Namely, the relative distance, in the left-right direction, between the preceding vehicle 75-2 and the vehicle 12 is the maximum value in a case in which this relative distance is in the usual range NA. On the other hand, the third lane 73 is positioned outside of the usual range NA. In this case, as illustrated in Fig. 12, the preceding vehicle image 85-2 is displayed on the display device 18 as an image that is smaller than the preceding vehicle image 85-1. On the other hand, the preceding vehicle image 85-2 and the preceding vehicle image 85-3 are displayed at the same size on the display device 18. In this way, in a case in which the relative distance, in the left-right direction, between the vehicle 12 and a relative moving body is in the usual range NA, the size of the relative moving body (the preceding vehicle 75-2) is varied in accordance with the relative distance. Namely, in a case in which the relative distance, in the left-right direction, between the vehicle 12 and a relative moving body is in the usual range NA, the longer the relative distance, the smaller the size of the relative moving body becomes. On the other hand, in a case in which the relative distance, in the left-right direction, between the vehicle 12 and a relative moving body (the preceding vehicle 75-3) is outside of the usual range NA, the size on the display device 18 of the preceding vehicle image 85-3 that corresponds to that relative moving body is maintained at the same size as that of the preceding vehicle image 85-2, which is the size of the time when the relative distance from the vehicle 12 is the maximum value in a case in which the relative distance is in the usual range NA. In this way, in the third modified example, the present disclosure is applied to a case in which the direction of the relative distance between the vehicle 12 and the relative moving body is the left-right direction. Accordingly, in the display device 18 of the third modified example, it is difficult for the vehicle occupant who is looking at the display device 18 to feel a sense of incongruity in a case in which the relative distance, in the left-right direction, between the vehicle 12 and the relative moving body is outside of the usual range NA.

Note that the technical concept of the third modified example may be applied to the displayed positions (displayed distances) of the preceding vehicle images 85-1, 85-2, 85-3 on the display device 18.

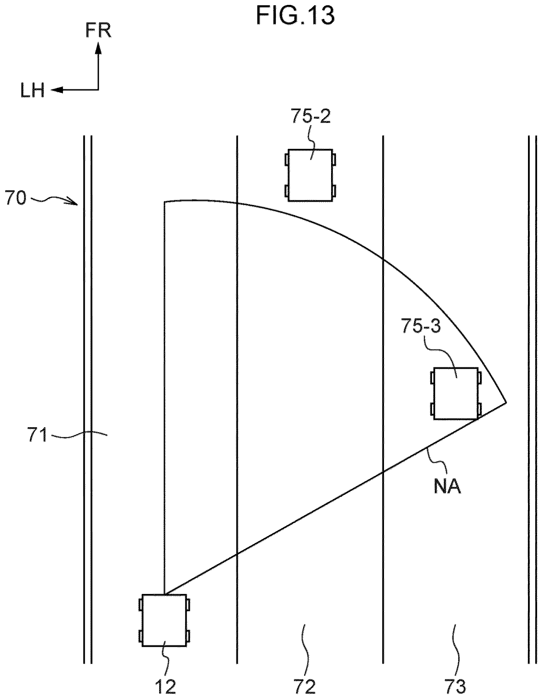

The present disclosure may be embodied in the form of a fourth modified example illustrated in Fig. 13. In this case, as illustrated in Fig. 13, it is assumed that the vehicle 12 is traveling in the first lane 71 of the road 70. In the fourth modified example, the distance, over which the vehicle 12 and a relative moving body positioned at the periphery of the vehicle 12 are connected by a straight line, is the relative distance between the vehicle 12 and the relative moving body. Therefore, for example, a position, which is ahead of the vehicle 12 and apart from the vehicle 12 by a predetermined distance, can be expressed by an arc whose center is the vehicle 12. Therefore, the usual range NA whose reference is the vehicle 12 is prescribed by the shape of a fan whose center is the vehicle 12. Accordingly, for example, the preceding vehicle image (not illustrated in Fig. 13), which represents the preceding vehicle 75-2 that is traveling in the second lane 72 at the outer side of the usual range NA, is displayed on the display device 18 at the same size as the preceding vehicle image 85-2 of Fig. 12. On the other hand, the preceding vehicle image (not illustrated in Fig. 13), which represents the preceding vehicle 75-3 that is traveling in the third lane 73 within the usual range NA, is displayed on the display device 18 so as to be larger than the preceding vehicle image 85-3.

The display control ECU 26 may be provided with only one of the image dimension determining map 62 (66) and the displayed position determining map 64 (68). Namely, when the relative distance between the vehicle 12 and the relative moving body changes, the size of the moving image that represents the relative moving body and is displayed on the display device 18, or the displayed position of the moving image on the display device 18, may be made invariable.

When the relative distance between the vehicle 12 and the relative moving body is in the first special range SA1 or the second special range SA2, the size of the moving image, that represents the relative moving body and is displayed on the display device 18, or the displayed position of the moving image on the display device 18, may be varied in accordance with the relative distance.

The moving image may be an image that is different than a preceding vehicle image. For example, the moving image may be at least one of an image representing a pedestrian, an image representing a motorcycle, an image representing a large vehicle such as a truck or a bus, an image representing a pole that is fixed to the ground, and an image representing a guardrail fixed to the ground, which images are detected by the sensor unit 20.

The display device of the present disclosure may be a device that is different than the display device 18. For example, the display device may be a HUD (head-up display).

The minimum value of the usual range NA may be a length that is different than 10 m. For example, the minimum value of the usual range NA may be an arbitrary value between 3 ~ 10m. Similarly, the maximum value of the usual range NA may be a length that is different than 110 m. For example, the maximum value of the usual range NA may be an arbitrary value between 100 ~ 130 m.

## Claims

1. A display device for a vehicle that is provided at a vehicle and that, when a detecting device detects a relative moving body, which is positioned at a periphery of the vehicle, in a predetermined detection range, can display a moving image representing the relative moving body,
wherein:
in a case in which a relative distance of the relative moving body from the vehicle is in a usual range, the display device for a vehicle changes a display condition, which is at least one of a size of or a displayed position of the moving image, in accordance with the relative distance, and
in a case in which the relative distance is outside of the usual range, the display device for a vehicle does not change the display condition.

2. The display device for a vehicle of claim 1, wherein:
in a case in which the relative distance is in the usual range, the display device for a vehicle gradually makes the moving image smaller as the relative distance becomes longer, and
given that a size of the moving image, of a time when the relative distance becomes a maximum value in a case in which the relative distance is in the usual range, is defined as a minimum dimension, the display device for a vehicle makes the size of the moving image, of a time when the relative distance is outside of the usual range and has become greater than the maximum value, be the minimum dimension.

3. The display device for a vehicle of claim 1 or claim 2, wherein:
in a case in which the relative distance is in the usual range, the display device for a vehicle gradually makes the moving image smaller as the relative distance becomes longer, and
given that a size of the moving image, of a time when the relative distance becomes a minimum value in a case in which the relative distance is in the usual range, is defined as a maximum dimension, the display device for a vehicle makes the size of the moving image, of a time when the relative distance is outside of the usual range and has become smaller than the minimum value, be the maximum dimension.

4. The display device for a vehicle of claim 1, wherein:
in a case in which the relative distance is in the usual range, the display device for a vehicle gradually makes the moving image smaller as the relative distance becomes longer, and
given that:
the size of the moving image, in a case in which the relative distance that is within the usual range is at an arbitrary first distance, is defined as a first dimension,
the size of the moving image, in a case in which the relative distance that is within the usual range is at an arbitrary second distance that is longer than the first distance, is defined as a second dimension,
the size of the moving image, in a case in which the relative distance that is within the usual range is at an arbitrary third distance that is longer than the second distance, is defined as a third dimension, and
the size of the moving image, in a case in which the relative distance that is within the usual range is at an arbitrary fourth distance that is longer than the third distance, is defined as a fourth dimension,
the display device for a vehicle makes a second dimension change amount, which is a value obtained by dividing, by the third dimension, a value obtained by subtracting the fourth dimension from the third dimension, be smaller than a first dimension change amount that is a value obtained by dividing, by the first dimension, a value obtained by subtracting the second dimension from the first dimension.

5. The display device for a vehicle of claim 1, wherein:
the display device for a vehicle can display a vehicle image representing the vehicle,
in a case in which the relative distance is in the usual range, the display device for a vehicle gradually makes a displayed distance, which is a distance between the vehicle image and the moving image, longer as the relative distance becomes longer, and
given that the displayed distance, of a time when the relative distance becomes a maximum value in a case in which the relative distance is in the usual range, is defined as a maximum distance, the display device for a vehicle makes the displayed distance, of a time when the relative distance is outside of the usual range and has become greater than the maximum value, be the maximum distance.

6. The display device for a vehicle of claim 1 or claim 5, wherein:
the display device for a vehicle can display a vehicle image representing the vehicle,
in a case in which the relative distance is in the usual range, the display device for a vehicle gradually makes a displayed distance, which is a distance between the vehicle image and the moving image, longer as the relative distance becomes longer, and
given that the displayed distance, of a time when the relative distance becomes a minimum value in a case in which the relative distance is in the usual range, is defined as a minimum distance, the display device for a vehicle makes the displayed distance, of a time when the relative distance is outside of the usual range and has become smaller than the minimum value, be the minimum distance.

7. The display device for a vehicle of claim 1, wherein:
the display device for a vehicle can display a vehicle image representing the vehicle,
in a case in which the relative distance is in the usual range, the display device for a vehicle gradually makes a displayed distance, which is a distance between the vehicle image and the moving image, longer as the relative distance becomes longer, and
given that:
the displayed distance, in a case in which the relative distance that is within the usual range is at an arbitrary first distance, is defined as a first displayed distance,
the displayed distance, in a case in which the relative distance that is within the usual range is at an arbitrary second distance that is longer than the first distance, is defined as a second displayed distance,
the displayed distance, in a case in which the relative distance that is within the usual range is at an arbitrary third distance that is longer than the second distance, is defined as a third displayed distance, and
the displayed distance, in a case in which the relative distance that is within the usual range is at an arbitrary fourth distance that is longer than the third distance, is defined as a fourth displayed distance,
the display device for a vehicle makes a second distance change amount, which is a value obtained by dividing, by the third displayed distance, a value obtained by subtracting the third displayed distance from the fourth displayed distance, be smaller than a first distance change amount that is a value obtained by dividing, by the first displayed distance, a value obtained by subtracting the first displayed distance from the second displayed distance.

8. The display device for a vehicle of claim 1 or claim 2, wherein:
the vehicle can execute drive assist control, and
the display device for a vehicle changes a size of the usual range in accordance with a level of the drive assist control.

9. The display device for a vehicle of claim 8, wherein
the display device for a vehicle expands the usual range as the level of the drive assist control increases.

10. The display device for a vehicle of claim 8, wherein
the display device for a vehicle makes a maximum value of the usual range larger as the level of the drive assist control increases.

11. A display method for a vehicle that, by a display device that is provided at a vehicle and that, when a detecting device detects a relative moving body, which is positioned at a periphery of the vehicle, in a predetermined detection range, can display a moving image representing the relative moving body:
in a case in which a relative distance of the relative moving body from the vehicle is in a usual range, changes a display condition, which is at least one of a size of or a displayed position of the moving image, in accordance with the relative distance; and
in a case in which the relative distance is outside of the usual range, does not change the display condition.

12. A computer-readable recording medium storing a program executable by a processor to perform processing, the processing comprising:
causing a display device provided at a vehicle to display a moving image representing a relative moving body, which is positioned at a periphery of the vehicle, when a detecting device detects the relative moving body in a predetermined detection range;
in a case in which a relative distance of the relative moving body from the vehicle is in a usual range, changing a display condition, which is at least one of a size of or a displayed position of the moving image, in accordance with the relative distance; and
in a case in which the relative distance is outside of the usual range, not changing the display condition.
